# EUROPÄISCHE PATENTSCHRIFT

(11) **EP 2 411 636 B1**
(45) Veröffentlichungstag und Bekanntmachung des Hinweises auf die Patenterteilung: **21.01.2015**
(21) Anmeldenummer: 10705595.6
(22) Anmeldetag: 24.02.2010
(51) Int. Cl.: F01N 3/20

(54) **VERFAHREN ZUR ZUFUHR VON REDUKTIONSMITTEL IN EIN ABGASSYSTEM UND ENTSPRECHENDES ABGASSYSTEM**
METHOD FOR ADDING REDUCTANT INTO AN EXHAUST SYSTEM AND EXHAUST SYSTEM
PROCEDÉ POUR AJOUTER RÉDUCTEUR À UN SYSTÈME DÉCHAPPEMENT ET SYSTÈME D'ÉCHAPPEMENT

(30) Priorität: 27.03.2009 DE 102009015419
(43) Veröffentlichungstag der Anmeldung: 01.02.2012
(73) Patentinhaber: Emitec Gesellschaft für Emissionstechnologie mbH, 53797 Lohmar (DE)
(72) Erfinder: MAUS, Wolfgang, 51429 Bergisch Gladbach (DE); BRÜCK, Rolf, 51429 Bergisch Gladbach (DE)
(74) Vertreter: Rössler, Matthias
(86) Internationale Anmeldenummer: PCT/EP2010/052314
(87) Internationale Veröffentlichungsnummer: WO 2010/108748

(56) Entgegenhaltungen:
- WO-A1-00/29728
- DE-A1-102006 023 145
- DE-A1-102007 044 222
- US-A1- 2004 098 972

## Beschreibung

Die Erfindung betrifft ein Verfahren und eine Vorrichtung zur Zufuhr von Reduktionsmittel oder Reduktionsmittelvorläufer in das Abgassystem einer mobilen Verbrennungskraftmaschine. Derartige Reduktionsmittelzufuhrverfahren und Vorrichtungen werden bevorzugt für Abgassysteme von mobilen Verbrennungskraftmaschinen mit hohen Emissionen von Stickstoffoxidverbindungen eingesetzt.

Die Abgase von Verbrennungskraftmaschinen weisen typischerweise Stoffe auf, deren Emission in die Umwelt unerwünscht ist. Hier sind insbesondere Kohlenstoffpartikel oder auch Russpartikel, Kohlenmonoxid und/oder Stickstoffoxidverbindungen zu nennen. Für diese Stoffe existieren in vielen Ländern Grenzwerte, bis zu welchen die Stoffe im Abgas von Verbrennungskraftmaschinen maximal enthalten sein dürfen. Es existieren verschiedene Methoden, um den Ausstoß der angegebenen Emissionsarten zu reduzieren.

Das Verhältnis der Mengen an Sauerstoff und Kraftstoff, welche der Verbrennungskraftmaschine zugeführt werden, spielt für den Schadstoffgehalt der Abgase einer Verbrennungskraftmaschine und für die Verfahren, welche zur Abgasreinigung geeignet sind, eine große Rolle. Für die Abgasreinigung ist es vorteilhaft, wenn der Lambda-Wert 1 beträgt. Dies bedeutet, dass der Verbrennungskraftmaschine so viel Sauerstoff und Kraftstoff zugeführt wird, dass Sauerstoff und Kraftstoff miteinander gerade vollständig verbrennen können.

In letzter Zeit finden Verbrennungskraftmaschinen, die bei einem Lambda-Wert größer 1 betrieben werden, mehr und mehr Verbreitung. Bei diesen Verbrennungskraftmaschinen liegt ein Sauerstoffüberschuss vor. Sie zeichnen sich z. B. durch Verbrauchsvorteile aus. Als Nebeneffekt steigen allerdings die Emissionen an Stickstoffoxidverbindungen (NOₓ) stark an. Um diesem Problem zu begegnen,
wurde das Verfahren der selektiv katalytischen Reduktion entwickelt. Hierbei wird dem Abgas der Verbrennungskraftmaschine z. B. Ammoniak und/oder Harnstoff oder ein entsprechendes Reduktionsmittel zugeführt, welches mit den Stickstoffoxidverbindungen im Abgas reagiert, wobei die unschädlichen Produkte Stickstoff, Sauerstoff und Wasser entstehen.

Meist wird Ammoniak dem Abgasstrom nicht direkt zugeführt. Ammoniak ist schlecht speicherbar. Zur Speicherung besser eignet sich Harnstoff oder eine Harnstoff-Wasser-Lösung. Bevorzugt ist der Einsatz einer 32,5 %igen hochreinen Harnstoff-Wasser-Lösung mit dem Handelsnamen AdBlue. Aus dem Harnstoff wird dann durch Thermolyse und/oder Hydrolyse Ammoniak generiert. Dazu ist eine Mindesttemperatur von ca. 250 °C und ggf. eine hydrolytisch wirkende Oberfläche, an welcher der Harnstoff vorbeigeführt wird, vorteilhaft.

Die Umsetzung des Harnstoffes in Ammoniak kann entweder im Abgasstrom oder abgasextern geschehen. Bei der abgasinternen Umsetzung wird die Harnstoff-Lösung dem Abgas z. B. in flüssiger, möglicherweise fein zerstäubter und/oder gasförmiger Form zugeführt. Anschließend wird der Harnstoff unter Einfluss der Abgastemperatur im Abgasstrom umgesetzt. Bei der abgasexternen Umsetzung erfolgt die Umsetzung in einem Konverter, welcher nicht von der Abgasströmung durchströmt wird. Dazu erfolgt eine Aufheizung des Konverters. Typischerweise geschieht dies entweder durch eine außen am Konverter vorbei geführte Abgasströmung durch Wärmeleitung oder durch externe Energiequellen. Hier sind insbesondere elektrische Heizer geeignet, welche schnell die zur Umsetzung erforderliche Temperatur erreichen können. Zu den Möglichkeiten der externen Umsetzung von Reduktionsmittelvorläufer in Ammoniak sei insbesondere auf die WO 2007/131784 A1 verwiesen.

Bei der Umsetzung des Harnstoffes in Ammoniak ist problematisch, dass insbesondere die Abgastemperaturen von Verbrennungskraftmaschinen, welche mit einem Lambda-Wert > 1 und damit mit hohen Emissionen von Stickstoffoxidverbindungen betrieben werden, besonders niedrig sind. Häufig reichen die Abgastemperaturen zur Umsetzung des Harnstoffes in Ammoniak nicht aus. Insbesondere bei Kraftfahrzeugen, welche im Stadtverkehr betrieben werden, oder bei Nutzfahrzeugen, welche aufgrund ihres Einsatzes selten unter großer Last betrieben werden, wie bspw. Stadtbussen, treten zur Umsetzung ausreichende Abgastemperaturen ausgesprochen selten auf. Aus diesem Grunde hat die abgasexterne Umsetzung oder die abgasexterne Verdampfung von Harnstoff eine große Bedeutung. Die dazu benötigte große Menge elektrischer Energie wirkt sich negativ auf den Wirkungsgrad der Verbrennungskraftmaschine aus.

Aus der DE-A1-102007044222 ist eine Vorrichtung zur Zufuhr von Reduktionsmittel in ein Abgassystem bekannt. Diese Vorrichtung umfasst einen Tank, in dem Reduktionsmittel in flüssigem Zustand gespeichert ist, wobei in dem Tank oberhalb des flüssigen Reduktionsmittels verdampftes, gasförmig gewordenes Reduktionsmittel vorliegt. An einer ersten Entnahmestelle in einem unteren Bereich des Tanks kann flüssiges Reduktionsmittel entnommen werden. An einer zweiten Entnahmestelle in einem oberen Bereich des Tanks kann gasförmiges Reduktionsmittel entnommen werden. Zur Zufuhr des flüssigen Reduktionsmittels zu dem Abgassystem ist eine erste Leitung vorgesehen und zur Zufuhr des gasförmigen Reduktionsmittels zu dem Abgassystem ist eine zweite Leitung vorgesehen, wobei die erste Leitung und die zweite Leitung voneinander getrennt sind. Durch die getrennten Leitungen soll die gezielte Abfuhr von in dem Tank gebildetem gasförmigem Reduktionsmittel ermöglicht werden, um einen Überdruck in dem Tank und eine unkontrollierte Freisetzung des gasförmigen Reduktionsmittels zu vermeiden.

Hiervon ausgehend ist es Aufgabe der vorliegenden Erfindung, die mit Bezug auf den Stand der Technik geschilderten Probleme zumindest teilweise zu lösen. Insbesondere soll ein Verfahren angegeben werden, durch welches die Umsetzung von Reduktionsmittel bei unterschiedlichen Betriebszuständen eines Abgassystems sichergestellt ist, wobei gleichzeitig die dazu notwendige Energie reduziert werden soll Darüber hinaus soll eine Vorrichtung vorgestellt werden, welche ebenfalls eine größtmögliche Umsetzung des Reduktionsmittelvorläufers bei den unterschiedlichen Betriebszuständen sicherstellt und gleichzeitig mit wenig Energie auskommt.

Diese Aufgaben werden gelöst mit einem Verfahren gemäß dem Patentanspruch 5 und einem Abgassystem gemäß dem Patentanspruch 1. Vorteilhafte Ausgestaltungen von Verfahren und Abgassystem sind Gegenstand der abhängigen Patentansprüche. Die in den abhängig formulierten Patentansprüchen einzeln angegebenen Merkmale sind in beliebiger, technologisch sinnvoller, Welse miteinander kombinierbar und zeigen weitere Ausgestaltungen der Erfindung auf. Die Erfindung wird zudem durch die Beschreibung insbesondere im Zusammenhang mit den Figuren weiter charakterisiert und präzisiert.

Im Rahmen der Erfindung wird ein Abgassystem, aufweisend zumindest einen Reduktionsmitteltank, eine Abgasleitung und mindestens eine Verbindungsleitung vom Reduktionsmitteltank zur Abgasleitung, vorgeschlagen, wobei durch die mindestens eine Verbindungsleitung mindestens ein erster Strömungspfad und mindestens ein zweiter Strömungspfad für Reduktionsmittel gebildet sind, wobei nur der erste Strömungspfad oder der zweite Strömungspfad mit mindestens einer der folgenden Komponenten ausgeführt ist
a) Kontaktheizer oder
b) Hydrolysekatalysator.

Das erfindungsgemäße Verfahren zur Zugabe von bevorratetem Reduktionsmittel zu dem erfindungsgemäßen Abgassystem einer Verbrennungskraftmaschine weist zumindest folgende Schritte auf:
a) Feststellen eines Zugabezeitpunktes;
b) Bestimmen zumindest eines Abgasparameters oder einer Reduktionsmittelmenge;
c) Festlegen eines Zugabezustandes des Reduktionsmittels in Abhängigkeit zumindest des Abgasparameters oder der Reduktionsmittelmenge, wobei der Zugabezustand ein Aggregatzustand und/oder eine chemische Zusammensetzung ist;
d) Behandeln des Reduktionsmittels, wenn der Zugabezustand nicht dem bevorratetem Zustand entspricht; und
e) Zugabe des Reduktionsmittels im Zugabezustand zum Abgassystem, wobei je nachdem, welcher Zugabezustand für das Reduktionsmittel festgelegt wird, das Reduktionsmittel entweder entlang des ersten Strömungspfades oder entlang des zweiten Strömungspfades gefördert wird, wobei die Schritte a) bis e) mehrfach wiederholt ausgeführt werden.

Zugabezeitpunkte können beispielsweise mit einer festgelegten Frequenz während des Betriebes der Verbrennungskraftmaschine festgestellt werden bzw. festgesetzt sein. Alternativ ist es möglich Zugabezeitpunkte in Abhängigkeit der Drehzahl bzw. der Taktfrequenz der Verbrennungkraftmaschine zu wählen. Auch eine kontinuierliche Zugabe von Reduktionsmittel ist im Rahmen der Erfindung möglich. Unter Zugabezeitpunkt ist dann insbesondere ein Zugabezeitraum während der kontinuierlichen Zugabe von Reduktionsmittel zu verstehen, für welchen ein bestimmter Zugabezustand festgelegt wird. Die Schritte a) bis e) werden dann derart mehrfach wiederholt ausgeführt, dass die einzelnen Zugabezeiträume direkt aufeinander folgen und so während der gesamten Betriebsdauer der Verbrennungskraftmaschine eine kontinuierliche Zugabe erfolgt.

Mit dem Bestimmen eines Abgasparameters in Schritt b) ist insbesondere gemeint, dass ein Abgasparameter in und/oder am Abgassystem mit Hilfe mindestens eines Messfühlers und/oder mindestens einer Messsonde ermittelt wird. Kumulativ oder alternativ hierzu ist auch möglich, dass die im Abgassystem benötigte Menge an Reduktionsmittel bestimmt wird. Dies kann unter Einbeziehung von aktuellen Messwerten, wie z. B. die Stickoxidmenge im produzierten Abgas, und/oder aus Erfahrungswerten, wie z. B. Kennwerter, Kennfeldern, etc., erfolgen. Unter der Reduktionsmittelmenge wird insbesondere die (Teil-)Menge verstanden, die zu einem (einzelnen) Zeitpunkt (insgesamt) dem Abgassystem zugeführt werden soll.

Unter Reduktionsmittel ist auch wenigstens ein Reduktionsmittelvorläufer zu verstehen. Als Reduktionsmittel kommt insbesondere Harnstoff oder Harnstoff-Wasser-Lösung zum Einsatz. Bevorzugt ist hierbei eine ca. 32,5 %ige Harnstoff-Wasser-Lösung. Mit Hilfe des Verfahrens kann das Reduktionsmittel in seinem Zugabezustand derart angepasst werden, dass immer eine möglichst vollständige Umsetzung des Reduktionsmittels in Ammoniak sichergestellt ist. Eine Behandlung des Reduktionsmittels in Schritt d) erfolgt typischerweise dann, wenn die Temperatur im Abgassystem zur Umsetzung des Reduktionsmittels nicht ausreicht. Dadurch, dass die Behandlung in Schritt d) nicht durchgeführt wird, wenn der in Schritt b) bestimmte Abgasparameter aufzeigt, dass eine Behandlung zur vollständigen Umsetzung des Reduktionsmittels nicht erforderlich ist, kann z. B. Energie gespart werden. Dies verbessert den Wirkungsgrad der Verbrennungskraftmaschine. Die Schritte a) bis e) werden typischerweise für jede Zugabe von Reduktionsmittel zum Abgassystem erneut durchgeführt. So wird eine ideale Anpassung des Zugabezustandes des Reduktionsmittels sichergestellt. Es ist allerdings auch möglich, dass die Schritte a) bis d) mit einer geringeren Frequenz als die eigentliche Zugabe in Schritt e) durchgeführt werden. So kann das erfindungsgemäße Verfahren mit einem geringeren Aufwand betrieben werden. Gleichzeitig verringert sich allerdings auch der Grad der Anpassung des Zugabezustandes an den Abgasparameter.

Unter einem Aggregatzustand als Zugabezustand eines Reduktionsmittels in Schritt c) wird insbesondere verstanden, ob das Reduktionsmittel fest, flüssig oder gasförmig ist. Regelmäßig kann entweder ein flüssiger Zugabezustand oder ein gasförmiger Zugabezustand festgelegt werden.

Unter einer chemischen Zusammensetzung als Zugabezustand eines Reduktionsmittels in Schritt c) wird insbesondere verstanden, dass das Reduktionsmittel aus bestimmten molekularen Verbindungen zu bestimmten Anteilen besteht. Regelmäßig besteht das zugeführte Reduktionsmittel teilweise aus reduzierend wirkenden molekularen Verbindungen, insbesondere Ammoniak, und teilweise aus Reduktionsmittelvorläufer, insbesondere Harnstoff und/oder Harnstoff-Wasser-Lösung. Unterschiedliche chemische Zusammensetzungen ergeben sich durch unterschiedliche Anteile an reduzierend wirkenden Verbindungen und an Reduktionsmittelvorläufer.

Der Aggregatzustand oder die chemische Zusammensetzung des Reduktionsmittels werden durch das Behandeln in Schritt d) verändert. Der Aggregatzustand kann beispielsweise durch eine Aufheizung des Reduktionsmittels derart beeinflusst werden, dass das Reduktionsmittel verdampft und/oder kondensiert. Die chemische Zusammensetzung kann beispielsweise durch eine zumindest teilweise Umsetzung, der molekularen Verbindungen aus denen das Reduktionsmittel besteht, geschehen. Regelmäßig ist hiermit eine Umsetzung von Reduktionsmittelvorläufer, insbesondere Harnstoff und/oder Harnstoff-Wasserlösung, in reduzierend wirkende Verbindungen, insbesondere Ammoniak, gemeint. Auch ist es möglich, dass bei der Behandlung in Schritt d) durch eine Mischung unterschiedlicher Reduktionsmittelkomponenten eine bestimmte chemische Zusammensetzung des Reduktionsmittels erreicht wird.

Besonders vorteilhaft ist das erfindungsgemäße Verfahren, wenn in Schritt b) als Abgasparameter eine Abgastemperatur ermittelt wird. Für die Umsetzung von Reduktionsmittel im Abgassystem ist die im Abgassystem vorliegende Abgastemperatur ein wichtiger Parameter. Eine thermische Umsetzung von Reduktionsmittel, also eine Umsetzung in Ammoniak aufgrund der vorliegenden Temperatur, erfolgt typischerweise besonders gut bei Abgastemperaturen von mehr als 250 °C. Alternativ ist es allerdings auch möglich, dass ein anderer Abgasparameter in Schritt b) bestimmt wird. Möglich ist hier bspw. ein Abgasdruck, ein chemischer Parameter des Abgasstromes wie bspw. ein Lambda-Wert oder ein Abgasvolumenstrom. Auch Kombinationen aus verschiedenen Parametern sind möglich. Zur Messung der Abgastemperatur wird typischerweise ein im Abgassystem integrierter Temperatursensor eingesetzt.

Gemäß einer weiteren Ausgestaltung des erfindungsgemäßen Verfahrens erfolgt in Schritt e) bei niedrigen Abgastemperaturen die Zufuhr des Reduktionsmittels gasförmig und bei hohen Abgastemperaturen flüssig. Die Umsetzung von gasförmigem Reduktionsmittel erfolgt auch bei niedrigeren Abgastemperaturen leichter als die Umsetzung von flüssigem Reduktionsmittel, weil gasförmiges Reduktionsmittel nicht zunächst verdampft werden muss. Hier ist zu bedenken, dass der Volumenstrom an zugeführtem Reduktionsmittel selbst die Abgastemperatur absenkt. Dies kann durch eine gasförmige Zufuhr vermieden werden. Weiterhin kann sich bei niedrigen Abgastemperaturen flüssiges Reduktionsmittel im Abgassystem an Oberflächen anlagern. Dort kann es korrosiv wirken und somit das Abgassystem schädigen.

Weiterhin vorteilhaft ist das erfindungsgemäße Verfahren, wenn in Schritt d) eine abgasexterne Verdampfung von flüssigem Reduktionsmittel erfolgt, wenn in Schritt c) ermittelt wurde, dass die Zufuhr gasförmig erfolgen soll. Die abgasexterne Verdampfung des Reduktionsmittels ermöglicht die Veränderung des Aggregatzustandes des Reduktionsmittels, ohne dass die Abgasströmung dabei beeinflusst wird. Insbesondere tritt keine Kühlung der Abgasströmung durch das Reduktionsmittel auf. Zur abgasexternen Verdampfung kann das flüssige Reduktionsmittel in ein spezielles Verdampfervolumen geführt werden. Besonders vorteilhaft ist, wenn das Verdampfervolumen mit einer Titanbeschichtung ausgeführt ist, insbesondere mit einer Titanoxidoberfläche. Diese Titanoxidoberfläche trägt bereits zur Umsetzung (Hydrolyse) des Harnstoffes zu Ammoniak bei. Somit erfolgt gleichzeitig mit der Verdampfung des Reduktionsmittels auch bereits eine teilweise Umsetzung, so dass die zur Umsetzung notwendige Temperatur im Abgassystem niedriger sein kann. Zur abgasexternen Verdampfung des Reduktionsmittels sei hier insbesondere auch auf die WO 2007/131784 A1 verwiesen, auf die hier vollumfänglich Bezug genommen wird.

In einer weiteren vorteilhaften Ausgestaltung des erfindungsgemäßen Verfahrens erfolgt die Verdampfung des flüssigen Reduktionsmittels ohne Einsatz eines Hydrolysekatalysators.

Besonders vorteilhaft ist das erfindungsgemäße Verfahren, wenn die abgasexterne Verdampfung des Reduktionsmittels in Schritt d) mit Hilfe von elektrischer Energie erfolgt. Die Verdampfung des Reduktionsmittels mit Hilfe von elektrischer Energie hat den großen Vorteil, dass sie sehr geringe Aufheizzeiten benötigt. Ein mit elektrischer Energie betriebener Verdampfer kann bereits nach sehr kurzer Zeit eine Temperatur erreichen, bei welcher das Reduktionsmittel nahezu vollständig verdampft. Es ist insbesondere vorteilhaft, wenn auch große anpassbare Leistungen zur Verdampfung eingesetzt werden können. Insbesondere zu Beginn des Betriebes der Verbrennungskraftmaschine ist nicht nur die Temperatur der Abgasströmung niedrig, sondern auch die Verdampfungseinrichtung und das Abgassystem weisen sehr niedrige Temperaturen auf. Diese niedrigen Temperaturen können durch die Zufuhr großer Mengen elektrischer Energie schnell kompensiert werden. Typischerweise sind maximale Heizleistungen von bis zu maximal 5000 Watt vorteilhaft.

Zudem wird auch ein Verfahren vorgeschlagen, bei dem die Zufuhr des Reduktionsmittels bis zu einer Menge von maximal 10 ml gasförmig und bei größerer Menge flüssig erfolgt.

Insbesondere kann beim Festlegen des Zugabezustandes des Reduktionsmittels in Schritt c) auch eine Menge an Reduktionsmittel, die zugeführt werden soll, berücksichtigt werden. So ist es vorteilhaft, eine Menge von bis zu maximal 10 ml [Milliliter], vorzugsweise maximal 5 ml und besonders bevorzugt maximal 2 ml, zu verdampfen und in Schritt e) gasförmig zuzuführen, während größere Mengen, insbesondere Mengen größer 20 ml [Milliliter] oder sogar größer 30 ml, in Schritt e) grundsätzlich flüssig zugeführt werden.

Bei dieser Ausführungsvariante Verfahrensvariante kann zumindest zeitweise auch auf die Bestimmung eines Abgasparameters in Schritt b) verzichtet werden, weil für das Festlegen des Zugabezustandes in Abhängigkeit der zuzuführenden Menge an Reduktionsmittel kein Abgasparameter erforderlich ist.

Es sind auch kombinierte Verfahrensführungen möglich, bei welchen unterhalb einer der genannten maximalen Reduktionsmittelmenge grundsätzlich eine gasförmige Zufuhr von Reduktionsmittel erfolgt und gegebenenfalls auf die Durchführung von Schritt b) verzichtet wird, während bei größeren Mengen das erfindungsgemäße Verfahren mit allen Verfahrensschritten a) bis e) durchgeführt wird und der Zugabezustand in Abhängigkeit eines Abgasparameters festgelegt wird. Genauso ist es auch möglich, dass bei Mengen, die größer sind als eine bestimmte Reduktionsmittelmenge, grundsätzlich eine flüssige Zufuhr von Reduktionsmittel erfolgt, und unterhalb dieser Reduktionsmittelmenge das erfindungsgemäße Verfahren mit allen Verfahrensschritten a) bis e) durchgeführt wird und der Zugabezustand in Abhängigkeit eines Abgasparameters festgelegt wird.

Hintergrund dieser Verfahrensvarianten ist, dass bei besonders kleinen Reduktionsmittelmengen die zur Verdampfung notwendige Energiemenge nicht sehr groß und die Energieeinbringung in das Reduktionsmittel gut sind, so dass bei derartigen Mengen die Vorteile der gasförmigen Zufuhr von Reduktionsmittel unproblematisch realisiert werden können. Bei erhöhten Reduktionsmittelmengen ist demgegenüber der Energieaufwand für die Verdampfung erheblich. Deshalb kann es hier sinnvoll sein, Reduktionsmittel grundsätzlich flüssig zuzuführen. Zu bedenken ist hier auch, dass ein Abgassystem normalerweise gerade dann, wenn erhöhte Temperaturen vorliegen, auch einen erhöhten Bedarf an Reduktionsmittel aufweist. Somit ist eine Zufuhr von flüssigem Reduktionsmittel hier oft unproblematisch realisierbar. Ebenso sind gerade bei geringem Reduktionsmittelbedarf die Temperaturen in einem Abgassystem häufig ausgesprochen niedrig, so dass regelmäßig nur eine reduzierte Umsetzung im Abgassystem erfolgen kann. Deshalb kann eine grundsätzliche gasförmige Zufuhr von Reduktionsmittel hier vorteilhaft sein.

Die Idee, den Zugabezustand des Reduktionsmittels (nur) mengenorientiert festzulegen, ist auch unabhängig von dem sonstigen Offenbarungsgehalt der hier behandelten Anmeldung realisierbar.

Des Weiteren wird ein Abgassystem, aufweisend zumindest einen Reduktionsmitteltank, eine Abgasleitung und mindestens eine Verbindungsleitung vom Reduktionsmitteltank zur Abgasleitung, vorgeschlagen, wobei durch die mindestens eine Verbindungsleitung mindestens ein erster Strömungspfad und mindestens ein zweiter Strömungspfad für Reduktionsmittel gebildet sind, wobei nur der erste Strömungspfad oder der zweite Strömungspfad mit mindestens einer der folgenden Komponenten ausgeführt ist:
a) Kontaktheizer oder
b) Hydrolysekatalysator.

Unter einem Strömungspfad ist ein Pfad gemeint, entlang welchem das Reduktionsmittel durch die mindestens eine Verbindungsleitung vom Reduktionsmitteltank zur Abgasleitung gelangt. Der Strömungspfad kann durch eine Führung des Reduktionsmittels durch den Verlauf der Verbindungsleitung vorgegeben sein. Dabei fließt das Reduktionsmittel entlang der Verbindungsleitung. Alternativ kann ein Strömungspfad dadurch vorgegeben sein, dass das Reduktionsmittel als kompakter Strahl einen Hohlraum in der Verbindungsleitung passiert und dabei nicht durch den Verlauf der Verbindungsleitung sondern bspw. mit Hilfe einer Düse geführt wird.

Ein derartiges Abgassystem eignet sich insbesondere zur Durchführung des erfindungsgemäßen Verfahrens. Je nachdem, welcher Zugabezustand für Reduktionsmittel festgelegt wird, wird das Reduktionsmittel entweder entlang des ersten Strömungspfades oder entlang des zweiten Strömungspfades gefördert. Die Mittel zur Behandlung des Reduktionsmittels sind dabei so ausgebildet, dass sie nur zum Einsatz kommen, wenn das Reduktionsmittel den zur Behandlung vorgesehenen Strömungspfad passiert.

Kontaktheizer zur Behandlung des Reduktionsmittels zeichnen sich dadurch aus, dass sie das Reduktionsmittel durch Kontakt mit dem Kontaktheizer erwärmen. Dabei kann es entweder lediglich zu einer Verdampfung des Reduktionsmittels und/oder bereits zu einer zumindest teilweisen thermischen Umsetzung in Ammoniak kommen. Hydrolysekatalysatoren zeichnen sich durch eine Oberfläche aus, welche infolge des Kontaktes des Reduktionsmittels mit dem Hydrolysekatalysator hydrolytisch wirkt und somit auch bei niedrigeren Temperaturen bereits zu einer zumindest teilweisen Umsetzung des Reduktionsmittels führen. Kontaktheizer und Hydrolysekatalysator können auch (teilweise) miteinander kombiniert sein.

Das Abgassystem ist insbesondere vorteilhaft, wenn eine Kombination von Kontaktheizer und Hydrolysekatalysator vorliegt, wobei ein Verdampfervolumen vorgesehen ist, das vorzugsweise mit einer Titanschicht bzw. einer Titanoxidschicht ausgekleidet ist und mit mindestens einem elektrischen Heizer ausgestattet ist. Die Vorteile einer Titan- und/oder Titanoxidschicht und eines elektrischen Heizers sind bereist bei der Beschreibung des erfindungsgemäßen Verfahrens erläutert worden. Zusätzlich zu der Titan- und/oder Titanoxidschicht bietet sich an, dass das Verdampfervolumen einen speziellen Wandaufbau aufweist, welcher zu einer besonders vorteilhaften Temperaturverteilung im Verdampfervolumen führt. Die innerste, dem Verdampfervolumen zugewandte Schicht kann dabei die besagte Titan- und/oder Titanoxidschicht sein. Titan weist typischerweise schlechte Wärmeleiteigenschaften auf. Aus diesem Grunde ist die Titan- und/oder Titanoxidschicht typischerweise dünn ausgeführt und um die Schicht herum eine Wand mit guter Wärmeleitfähigkeit ausgebildet. Außen an dieser Wand ist wahlweise eine Heizleitung oder eine Heizschicht ausgeführt, welche einen elektrischen Widerstand aufweist und so durch gezielte Bestromung zur elektrischen Aufheizung des Verdampfervolumens geeignet ist. Auch hier sei auf die WO 2007/131784 A1 verwiesen, auf die in Bezug auf die Gestaltung des Verdampfervolumens vollumfänglich Bezug genommen wird.

Darüber hinaus vorteilhaft ist das erfindungsgemäße Abgassystem, wenn mindestens eine Einspritzdüse zur flüssigen Zufuhr von Reduktionsmittel in das Abgassystem ausgebildet ist, wobei die Einspritzdüse dazu geeignet ist, das Reduktionsmittel fein zu zerstäuben. Bei der Zufuhr von flüssigem Reduktionsmittel muss die Verdampfung des Reduktionsmittels in der Abgasströmung erfolgen. Dabei ist es vorteilhaft, wenn die einzelnen Reduktionsmitteltropfen sehr klein sind, was durch eine feine Zerstäubung erreicht werden kann. Kleine Reduktionsmitteltropfen weisen, bezogen auf ihr Volumen, eine große Oberfläche auf, so dass eine schnelle Verdampfung des Reduktionsmittels erfolgen kann. Die Einspritzdüse ist bevorzugt nur mit dem Strömungspfad gekoppelt, der keinen Kontaktheizer bzw. keinen Hydrolysekatalysator aufweist.

Darüber hinaus vorteilhaft ist das erfindungsgemäße Abgassystem, wenn in der mindestens einen Verbindungsleitung ein verstellbarer Strömungsumlenker vorgesehen ist, mit welchem wahlweise der erste Strömungspfad oder der zweite Strömungspfad aktiviert werden kann. Mit Verstellbarkeit ist hier gemeint, dass die Aktivierung des ersten Strömungspfades oder des zweiten Strömungspfades durch ein einfaches Eingabesignal an den Strömungsumlenker erfolgen kann. Durch einen solchen Strömungsumlenker kann typischerweise die Verbindungsleitung in ihrer Geometrie verändert werden. Der verstellbare Strömungsumlenker kann beispielsweise eine regelbare Verzweigung sein, mittels welcher zwischen dem ersten Strömungspfad und dem zweiten Strömungspfad umgestellt werden kann. Alternativ kann der Strömungsumlenker eine verstellbare Düse sein, durch welche ein Strömungspfad in Form einer bestimmten Richtung oder in Form einer bestimmten Strahlform vorgegeben werden kann.

Auch erfindungsgemäß ist ein Kraftfahrzeug, aufweisend ein zur Durchführung des erfindungsgemäßen Verfahrens eingerichtetes Abgassystem oder ein erfindungsgemäßes Abgassystem. Das erfindungsgemäße Verfahren kann bei einem derartigen Kraftfahrzeug beispielsweise in die Steuerung des Abgassystems und/oder die Motorsteuerung integriert werden.

Die Erfindung sowie das technische Umfeld werden nachfolgend anhand der Figuren näher erläutert. Es ist darauf hinzuweisen, dass die Figuren besonders bevorzugte Ausführungsvarianten der Erfindung betreffen, auf die diese jedoch nicht beschränkt ist. Auch ist darauf hinzuweisen, dass die Figuren und insbesondere die dargestellten Größenverhältnisse nur schematisch sind. Es zeigen:
- Fig. 1:: ein Kraftfahrzeug mit einem erfindungsgemäßen Abgassystem, und
- Fig. 2:: ein Verdampfervolumen für ein weiteres erfindungsgemäßes Abgassystem.

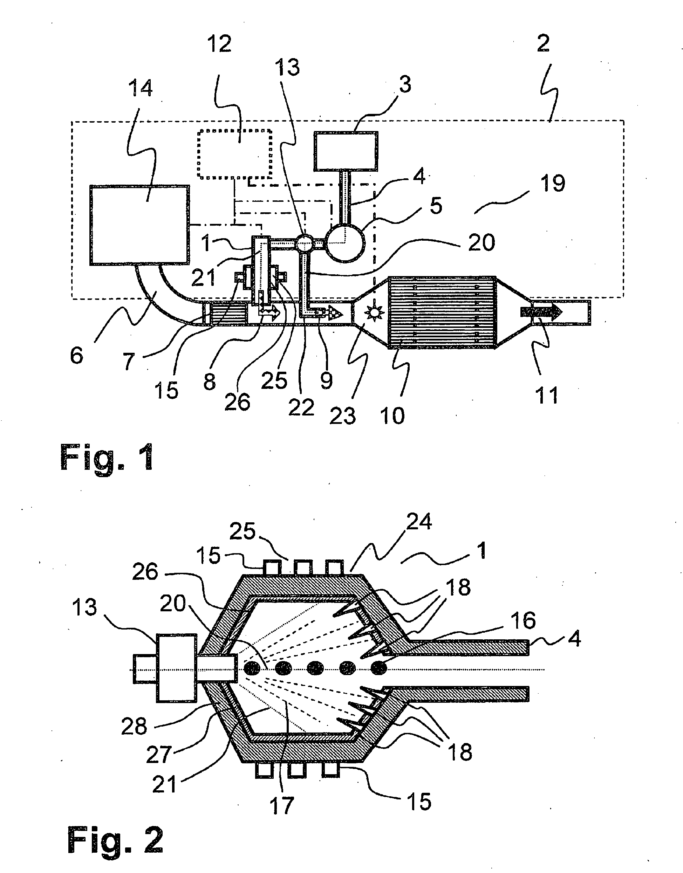

Das in Fig. 1 dargestellte Kraftfahrzeug 2 weist eine Verbrennungskraftmaschine 14 mit einem erfindungsgemäßen Abgassystem 19 auf. Das Abgassystem 19 umfasst eine Abgasleitung 6, welche sich weg von der Verbrennungskraftmaschine 14 erstreckt. Durch die Abgasleitung 6 fließt die Abgasströmung 11 von der Verbrennungskraftmaschine 14 weg. Dabei passiert die Abgasströmung 11 entlang der Abgasleitung 6 zunächst einen Katalysator 7. Dieser Katalysator 7 ist bereits zur Umsetzung von Schadstoffen in der Abgasströmung 11 vorgesehen. Anschließend passiert die Abgasströmung 11 eine erste Zufuhr 8 für gasförmiges Reduktionsmittel und dann eine zweite Zufuhr 9 für flüssiges Reduktionsmittel. Die zweite Zufuhr 9 ist mit einer Einspritzdüse 22 versehen, welche das flüssige Reduktionsmittel fein zerstäuben kann. Die Reihenfolge kann aber auch abgewandelt werden. Entlang der Abgasleitung 6 anschließend ist ein Messfühler 23 vorgesehen, mittels welchem ein Abgasparameter überwacht wird. Nach dem Messfühler 23 ist ein SCR-Katalysator 10 vorgesehen, in welchem die Umsetzung der im Abgas enthaltenen Stickstoffoxidverbindungen mit dem Reduktionsmittel erfolgt. Zur Reduktionsmittelzufuhr in das Abgassystem 19 ist ein Reduktionsmitteltank 3 vorgesehen. Darüber hinaus existiert eine Verbindungsleitung 4, welche den Reduktionsmitteltank 3 mit der Abgasleitung 6 verbindet. In der Verbindungsleitung 4 ist eine Pumpe 5 zur Förderung des Reduktionsmittels vorgesehen. Weiterhin existiert in der Verbindungsleitung 4 ein verstellbarer Strömungsumlenker 13 hier ausgeführt als regelbare Verzweigung, über welchen bedarfsgerecht eingestellt werden kann, ob das einzuleitende, ggf. dosierte Reduktionsmittel vom Reduktionsmitteltank 3 hin zur Abgasleitung 6 einem ersten Strömungspfad 20 oder einem zweiten Strömungspfad 21 folgt. Lediglich entlang des zweiten Strömungspfades 21 ist ein kombinierter Kontaktheizer mit einem Hydrolysekatalysator 26 ausgebildet, der ein Verdampfervolumen 1 aufweist. Dieses Verdampfervolumen 1 kann mit Hilfe eines elektrischen Heizers 15 aufgeheizt werden, wodurch eine Behandlung des Reduktionsmittels erfolgen kann. Zur Abstimmung der Arbeitsweise von Pumpe 5, verstellbarem Strömungsumlenker 13, elektrischem Heizer 15 und Verbrennungskraftmaschine 14 unter Berücksichtigung des mit Hilfe des Messfühlers 23 ermittelten Abgasparameters ist zusätzlich eine Steuerung 12 vorgesehen.

Bei der Durchführung des erfindungsgemäßen Verfahrens in einem Abgassystem 19 gemäß Fig. 1 wird, nachdem ein Zugabezeitpunkt von der Steuerung 12 festgestellt wird, mit Hilfe des Messfühlers 23 ein Abgasparameter bestimmt. Anschließend wird in der Steuerung 12 ein bestimmter Zugabezustand des Reduktionsmittels festgelegt. Der verstellbare Strömungsumlenker 13 in der Verbindungsleitung 4 wird derart eingestellt, dass das Reduktionsmittel dem dem festgelegten Zugabezustand entsprechenden Strömungspfad (erster Strömungspfad 20 oder zweiter Strömungspfad 21) folgen muss. Außerdem wird überprüft, ob der Zustand des Reduktionsmittels im Reduktionsmitteltank 3 dem festgelegten Zugabezustand des Reduktionsmittels entspricht oder nicht. Falls der festgelegte Zugabezustand vom Zustand des Reduktionsmittels im Reduktionsmitteltank 3 abweicht, wird mit Hilfe des Kontaktheizers 25 und/oder des Hydrolysekatalysators 26 und des elektrischen Heizers 15 das Reduktionsmittel derart behandelt, dass der Zugabezustand dem festgelegten Zugabezustand entspricht. Je nachdem welcher Zugabezustand durch die Steuerung 12 festgelegt wurde, erfolgt die Zugabe des Reduktionsmittels mit der ersten Zufuhr 8 oder mit der zweiten Zufuhr 9. Die Motorsteuerung 12 stellt eine mehrfache und insbesondere eine regelmäßige Wiederholung der einzelnen Schritte des Zugabeverfahrens während des Betriebes der Verbrennungskraftmaschine 14 sicher.

Fig. 2 gibt eine Ausgestaltung von Verbindungsleitung 4, verstellbarem Strömungsumlenker 13 und Verdampfervolumen 1 an, welche für eine weitere Ausgestaltung des erfindungsgemäßen Abgassystems geeignet ist. Der verstellbare Strömungsumlenker 13 ist hier als verstellbare Strahlbildungseinrichtung ausgeführt und in der Verbindungsleitung 4 vorgesehen. Durch diese verstellbare Strahlbildungseinrichtung ist es möglich, dass das Reduktionsmittel entweder entlang eines ersten Strömungspfades 20 als kompakter Strahl 16 gefördert wird oder entlang eines abweichenden zweiten Strömungspfades 21 als Sprühstrahl 17, so dass verschiedene Strahlverläufe und/oder Auftreffpunkte, bzw. Auftreffflächen des Strahles gegeben sind. Sowohl der erste Strömungspfad 20 als auch der zweite Strömungspfad 21 passieren dabei das Verdampfervolumen 1. Der erste Strömungspfad 20 ist dabei kompakt, während der zweite Strömungspfad 21 aufgefächert ist. Der kompakte Strahl 16 entlang des ersten Strömungspfades 20 passiert das Verdampfervolumen 1 ohne dabei zu verdampfen. Dies liegt insbesondere daran, dass er das Verdampfervolumen 1 auf kürzestem Wege ohne Kontakt mit der Wand 24 bzw. dem Kontaktheizer 25 passiert und im Verdampfervolumen 1 praktisch keine Wärmeenergie aufnimmt. Der Sprühstrahl 17 fächert sich auf und verteilt sich im Verdampfervolumen 1 und trifft auf die Wände 24 bzw. den Kontaktheizer 25. Ggf. weisen die Wände 24 des Verdampfervolumens 1 spezielle Strukturen 18 auf, welche zu einer Anlagerung bzw. zum Kontakt der einzelnen Tröpfchen des Sprühstrahles 17 führen und somit eine Verweilzeit des Reduktionsmittels im Verdampfervolumen 1 sicherstellen, während welcher das Reduktionsmittel verdampft. Die Wand 24 des Verdampfervolumens 1 kann, wie bereits ausgeführt, entsprechend der WO 2007/131784 A1 mit einer inneren Titanschicht 27 und einer speziellen wärmeleitenden Schicht 28 ausgeführt sein. So kann die Titanschicht 27 auch als Hydrolysekatalysator 26 wirken. Gleichzeitig stellt die wärmeleitende Schicht 28 eine gleichmäßige Verteilung der Temperatur im Verdampfervolumen 1 sicher. Außen um das Verdampfervolumen 1 herum befindet sich ein elektrischer Heizer 15, durch welchen das Verdampfervolumen 1 auf die für die Verdampfung erforderliche Temperatur gebracht werden kann.

Das erfindungsgemäße Verfahren und das erfindungsgemäße Abgassystem ermöglichen eine Zufuhr von Reduktionsmittel zu einem Abgassystem, in dem jeweils für die Abgastemperatur geeigneten Zustand, so dass eine möglichst vollständige Umsetzung des Reduktionsmittels erfolgt. Darüber hinaus reduzierenden das erfindungsgemäße Verfahren und das erfindungsgemäße Abgassystem die zur Umsetzung von Reduktionsmittel benötigte Menge Energie.

### Bezugszeichenliste

- 1: Verdampfervolumen
- 2: Kraftfahrzeug
- 3: Reduktionsmitteltank
- 4: Verbindungsleitung
- 5: Pumpe
- 6: Abgasleitung
- 7: Katalysator
- 8: erste Zufuhr
- 9: zweite Zufuhr
- 10: SCR-Katalysator
- 11: Abgasströmung
- 12: Steuerung
- 13: verstellbarer Strömungsumlenker
- 14: Verbrennungskraftmaschine
- 15: elektrischer Heizer
- 16: kompakter Strahl
- 17: Sprühstrahl
- 18: Struktur
- 19: Abgassystem
- 20: erster Strömungspfad
- 21: zweiter Strömungspfad
- 22: Einspritzdüse
- 23: Messfühler
- 24: Wand
- 25: Kontaktheizer
- 26: Hydrolysekatalysator
- 27: Titanschicht
- 28: wärmeleitende Schicht

## Patentansprüche

1. Abgassystem (19) aufweisend zumindest einen Reduktionsmitteltank (3), eine Abgasleitung (6) und mindestens eine Verbindungsleitung (4) vom Reduktionsmitteltank (3) zur Abgasleitung (6), wobei durch die mindestens eine Verbindungsleitung (4) mindestens ein erster Strömungspfad (20) und mindestens ein zweiter Strömungspfad (21) für Reduktionsmittel gebildet sind, wobei nur der erste Strömungspfad (20) oder der zweite Strömungspfad (21) mit mindestens einer der folgenden Komponenten ausgeführt ist:
a) Kontaktheizer (25) oder
b) Hydrolysekatalysator (26).

2. Abgassystem (19) nach Patentanspruch 1, wobei eine Kombination von Kontaktheizer (25) und Hydrolysekatalysator (26) vorliegt, wobei mindestens ein Verdampfervolumen (1) vorgesehen ist, das vorzugsweise mit einer Titanschicht (27) ausgekleidet ist und mit mindestens einem elektrischen Heizer (15) ausgestattet ist.

3. Abgassystem (19) nach Patentanspruch 1 oder 2, wobei mindestens eine Einspritzdüse (22) zur flüssigen Zufuhr von Reduktionsmittel in das Abgassystem (19) ausgebildet ist, wobei die Einspritzdüse (22) dazu geeignet ist das Reduktionsmittel fein zu zerstäuben.

4. Abgassystem (19) nach einem der Patentansprüche 1 bis 3, wobei in der mindestens einen Verbindungsleitung (4) ein verstellbarer Strömungsumlenker (13) vorgesehen ist, mit welchem wahlweise der erste Strömungspfad (20) oder der zweite Strömungspfad (21) aktiviert werden kann.

5. Verfahren zur Zugabe von bevorratetem Reduktionsmittel zu_einem Abgassystem (19) gemäß einem der Patentansprüche 1 bis 4 einer Verbrennungskraftmaschine (14) aufweisend zumindest folgende Schritte:
a) Feststellen eines Zugabezeitpunktes;
b) Bestimmen zumindest eines Abgasparameters oder einer Reduktionsmittelmenge;
c) Festlegen eines Zugabezustandes des Reduktionsmittels in Abhängigkeit zumindest des Abgasparameters oder der Reduktionsmittelmenge, wobei der Zugabezustand zumindest ein Aggregatzustand oder eine chemische Zusammensetzung ist;
d) Behandeln des Reduktionsmittels, wenn der Zugabezustand nicht dem bevorratetem Zustand entspricht; und
e) Zugabe des Reduktionsmittels im Zugabezustand zum Abgassystem (19), wobei je nachdem, welcher Zugabezustand für das Reduktionsmittel festgelegt wird, das Reduktionsmittel entweder entlang des ersten Strömungspfades (20) oder entlang des zweiten Strömungspfades (21) gefördert wird,
wobei die Schritte a) bis e) mehrfach wiederholt ausgeführt werden,.

6. Verfahren nach Patentanspruch 5, wobei in Schritt b) als Abgasparameter eine Abgastemperatur ermittelt wird.

7. Verfahren nach Patentanspruch 6, wobei in Schritte e) bei niedrigen Abgastemperaturen die Zufuhr des Reduktionsmittels gasförmig und bei hohen Abgastemperaturen flüssig erfolgt.

8. Verfahren nach einem der Patentansprüche 5 bis 7, wobei in Schritt d) eine abgasexterne Verdampfung von flüssigem Reduktionsmittel erfolgt, wenn in Schritt c) ermittelt wurde, dass die Zufuhr gasförmig erfolgen soll.

9. Verfahren nach Patentanspruch 8, wobei die abgasexterne Verdampfung von flüssigem Reduktionsmittel mit Hilfe von elektrischer Energie erfolgt.

10. Verfahren nach einem der Patentansprüche 5 bis 9, wobei die Zufuhr des Reduktionsmittels bis zu einer Menge von maximal 10 ml gasförmig und bei größerer Menge flüssig erfolgt.

11. Kraftfahrzeug (2) aufweisend ein zur Durchführung eines Verfahrens nach einem der Patentansprüche 5 bis 10 eingerichtetes Abgassystem (19) oder ein Abgassystem (19) nach einem der Patentansprüche 1 bis 4.

## Claims

1. Exhaust system (19) having at least one reducing agent tank (3), an exhaust line (6) and at least one connecting line (4) from the reducing agent tank (3) to the exhaust line (6), wherein the at least one connecting line (4) forms at least one first flow path (20) and at least one second flow path (21) for reducing agent, wherein only the first flow path (20) or the second flow path (21) is formed with at least one of the following components:
a) contact heater (25) or
b) hydrolysis catalytic converter (26).

2. Exhaust system (19) according to claim 1, wherein a combination of contact heater (25) and hydrolysis catalytic converter (26) is provided, wherein at least one evaporator volume (1) is provided which is preferably lined with a titanium layer (27) and equipped with at least one electric heater (15).

3. Exhaust system (19) according to claim 1 or 2, wherein at least one injection nozzle (22) is designed for the supply of reducing agent in liquid form into the exhaust system (19), wherein the injection nozzle (22) is suitable for finely atomizing the reducing agent.

4. Exhaust system (19) according to one of claims 1 to 3, wherein an adjustable flow deflector (13) is provided in the at least one connecting line (4), by means of which flow deflector the first flow path (20) or the second flow path (21) can be selectively activated.

5. Method for feeding stored reducing agent into an exhaust system (19) according to one of claims 1 to 4 of an internal combustion engine (14), having at least the following steps:
a) establishing a feed time;
b) determining at least one exhaust-gas parameter or a reducing agent quantity;
c) defining a feed state of the reducing agent as a function of at least the exhaust-gas parameter or the reducing agent quantity, wherein the feed state is at least a state of aggregation or a chemical composition;
d) treating the reducing agent if the feed state does not correspond to the stored state; and
e) feeding the reducing agent in the feed state into the exhaust system (19), wherein the reducing agent is conducted either along the first flow path (20) or along the second flow path (21) depending on which feed state for the reducing agent is defined,
wherein steps a) to e) are repeated multiple times.

6. Method according to claim 5, wherein in step b), an exhaust-gas temperature is determined as an exhaust-gas parameter.

7. Method according to claim 6, wherein in step e), the reducing agent is supplied in gaseous form at low exhaust-gas temperatures and is supplied in liquid form at high exhaust-gas temperatures.

8. Method according to one of claims 5 to 7, wherein in step d), an exhaust-gas-external evaporation of liquid reducing agent takes place if it was determined in step c) that the supply should take place in gaseous form.

9. Method according to claim 8, wherein the exhaust-gas-external evaporation of liquid reducing agent takes place by means of electrical energy.

10. Method according to one of claims 5 to 9, wherein the reducing agent is supplied in gaseous form in the case of amounts up to a maximum of 10 ml, and is supplied in liquid form in the case of larger amounts.

11. Motor vehicle (2) having an exhaust system (19) set up for carrying out a method according to one of claims 5 to 10 or an exhaust system (19) according to one of claims 1 to 4.

## Revendications

1. Système de gaz d'échappement (19) présentant au moins un réservoir de réducteur (3), une conduite de gaz d'échappement (6) et au moins une conduite de liaison (4) allant du réservoir de réducteur (3) à la conduite de gaz d'échappement (6), au moins un premier chemin d'écoulement (20) et au moins un deuxième chemin d'écoulement (21) pour le réducteur étant formés par l'au moins une conduite de liaison (4), seulement le premier chemin d'écoulement (20) ou le deuxième chemin d'écoulement (21) étant réalisé avec au moins l'un des composants suivants:
a) un dispositif de chauffage par contact (25) ou
b) un catalyseur d'hydrolyse (26).

2. Système de gaz d'échappement (19) selon la revendication 1, dans lequel une combinaison d'un dispositif de chauffage par contact (25) et d'un catalyseur d'hydrolyse (26) est prévue, au moins un volume d'évaporateur (1) étant prévu, lequel est revêtu de préférence d'une couche de titane (27) et est pourvu d'au moins un dispositif de chauffage électrique (15).

3. Système de gaz d'échappement (19) selon la revendication 1 ou 2, dans lequel au moins une buse d'injection (22) est réalisée pour l'alimentation fluide en réducteur dans le système de gaz d'échappement (19), la buse d'injection (22) étant prévue pour pulvériser finement le réducteur.

4. Système de gaz d'échappement (19) selon l'une quelconque des revendications 1 à 3, dans lequel, dans l'au moins une conduite de liaison (4), est prévu un déflecteur d'écoulement réglable (13) avec lequel, au choix, le premier chemin d'écoulement (20) ou le deuxième chemin d'écoulement (21) peut être activé.

5. Procédé pour ajouter un réducteur stocké à un système de gaz d'échappement (19) selon l'une quelconque des revendications 1 à 4 d'un moteur à combustion interne (14), présentant au moins les étapes suivantes:
a) établissement d'un instant d'ajout;
b) détermination d'au moins un paramètre de gaz d'échappement ou d'une quantité de réducteur;
c) fixation d'un état d'ajout de réducteur en fonction au moins du paramètre de gaz d'échappement ou de la quantité de réducteur, l'état d'ajout étant au moins un état physique ou une composition chimique;
d) traitement du réducteur si l'état d'ajout ne correspond pas à l'état stocké; et
e) ajout du réducteur dans l'état d'ajout au système de gaz d'échappement (19), le réducteur étant refoulé soit le long du premier chemin d'écoulement (20) soit le long du deuxième chemin d'écoulement (21) selon l'état d'ajout fixé pour le réducteur,
les étapes a) à e) étant réalisées de manière répétée plusieurs fois.

6. Procédé selon la revendication 5, dans lequel, dans l'étape b), on détermine, en tant que paramètre de gaz d'échappement, une température de gaz d'échappement.

7. Procédé selon la revendication 6, dans lequel, dans l'étape e), en cas de basses températures de gaz d'échappement, l'alimentation en réducteur s'effectue sous forme gazeuse et, en cas de températures de gaz d'échappement élevées, sous forme liquide.

8. Procédé selon l'une quelconque des revendications 5 à 7, dans lequel, dans l'étape d), une vaporisation d'un réducteur liquide se produit à l'extérieur du gaz d'échappement lorsque l'on a déterminé, à l'étape c), que l'alimentation devait s'effectuer sous forme gazeuse.

9. Procédé selon la revendication 8, dans lequel la vaporisation de réducteur liquide à l'extérieur du gaz d'échappement se produit à l'aide d'énergie électrique.

10. Procédé selon l'une quelconque des revendications 5 à 9, dans lequel l'alimentation en réducteur s'effectue jusqu'à une quantité de 10 ml au maximum sous forme gazeuse et avec une plus grande quantité sous forme liquide.

11. Véhicule automobile (2) présentant un système de gaz d'échappement (19) prévu pour mettre en oeuvre un procédé selon l'une quelconque des revendications 5 à 10, ou un système de gaz d'échappement (19) selon l'une quelconque des revendications 1 à 4.
